# EUROPEAN PATENT APPLICATION

(11) **EP 4 156 141 A1**
(43) Date of publication of application: **29.03.2023**
(21) Application number: 22196497.6
(22) Date of filing: 20.09.2022
(51) Int. Cl.: G08C 17/02

(54) **PORTABLE ACCESS BOX AND COMMUNICATIONS SYSTEM**

(30) Priority: 26.09.2021 CN 202122340485 U
(71) Applicant: Huawei Technologies Co., Ltd., Shenzhen, Guangdong 518129, (CN)
(72) Inventor: XU, Kai, Shenzhen, 518129 (CN); ZHAI, Houming, Shenzhen, 518129 (CN); GUO, Zhigang, Shenzhen, 518129 (CN); ZHAO, Zhanwei, Shenzhen, 518129 (CN)
(74) Representative: Thun, Clemens

(57) **Abstract**

This application belongs to the field of communications technologies, and discloses a portable access box and a communications system. The portable access box includes a housing, a power supply component, an interface component, and a transceiver component. The power supply component, the interface component, and the transceiver component are all located in the housing. The power supply component is separately electrically connected to the interface component and the transceiver component. The interface component is electrically connected to the transceiver component. The interface component is configured to establish a communication connection to a to-be-commissioned communications device. The transceiver component is configured to establish a communication connection to a remote device.

## Description

### TECHNICAL FIELD

This application relates to the field of communications technologies, and in particular, to a portable access box and a communications system.

### BACKGROUND

In the communications field, when network entry configuration or maintenance is performed on communications devices such as a router and a switch, a skilled person generally needs to carry a notebook computer into an equipment room, and connect the notebook computer to a to-be-commissioned communications device. Then, the skilled person obtains data of the to-be-commissioned communications device by using the notebook computer, to analyze the to-be-commissioned communications device; or the skilled person performs information configuration and the like on the to-be-commissioned communications device by using the notebook computer.

It can be learned that each time maintenance is performed on the to-be-commissioned communications device, the skilled person needs to carry the notebook computer into the equipment room, and perform a related operation near the communications device. Consequently, the maintenance performed on the communications device has relatively low flexibility.

### SUMMARY

This application provides a portable access box and a communications system, to resolve a problem in a related technology. The technical solution is as follows:

According to an aspect, a portable access box is provided. The portable access box includes a housing, a power supply component, an interface component, and a transceiver component. The power supply component, the interface component, and the transceiver component are all located in the housing. The power supply component is separately electrically connected to the interface component and the transceiver component. The interface component is electrically connected to the transceiver component. The interface component is configured to establish a communication connection to a to-be-commissioned communications device. The transceiver component is configured to establish a communication connection to a remote device.

In the solution shown in this application, a skilled person does not need to carry a notebook computer when performing maintenance on the to-be-commissioned communications device in the equipment room. The skilled person needs to carry only the portable access box with a relatively small volume into the equipment room, and establish the data connection between the portable access box and the communications device in the equipment room. Then, the skilled person may leave the equipment room, and obtain data of the communications device by using the remote device outside the equipment room. It can be learned that in this solution, the skilled person can perform an operation on the communications device outside the equipment room, without being stuck in the equipment room to perform an operation on the communications device, thereby improving flexibility of performing maintenance on the communications device.

In addition, when the skilled person performs maintenance on the communications device in the equipment room, the skilled person does not need to carry the notebook computer with a large volume and a large weight, to facilitate travel of the skilled person.

In addition, the skilled person does not need to perform the operation in the equipment room with a relatively poor environment, but performs the operation in a relatively comfortable environment outside the equipment room, so that working efficiency of the skilled person can be improved to a certain extent.

In addition, the portable access box carried by the skilled person includes the power supply component, to ensure the long-time operation of the skilled person.

In a possible implementation, the interface component includes a network port and a serial port.

In the solution shown in this application, the network port and the serial port are independently located in the housing of the portable access box, and are exposed from the housing, to facilitate a connection to the communications device. The network port may be a standard network port encapsulated according to the standard encapsulation protocol. The serial port may also be a standard serial port encapsulated according to the standard encapsulation protocol.

In a possible implementation, the interface component includes a combined serial port and network port. A plurality of pins in the combined serial port and network port include a serial port pin and a network port pin.

In the solution shown in this application, the combined serial port and network port is a composite port integrating the serial port and the network port. In this case, the plurality of pins in the combined serial port and network port include both the serial port pin used as the serial port and the network port pin used as the network port.

In a possible implementation, the power supply component includes at least one power entry part. Each power entry part is electrically connected to the interface component and the transceiver component.

In the solution shown in this application, a quantity of power entry parts may be one. In this case, the power entry part may be a pin integrated into the interface component. For example, the power entry part may be a pin integrated into the network port, or may be a pin integrated into the serial port, or may be a pin integrated into the combined serial port and network port. Alternatively, if the portable access box includes a USB interface, the power entry part may be a pin integrated into the USB interface.

In this way, regardless of whether the power entry part is integrated into the network port, the serial port, the combined serial port and network port, or the USB interface, the portable access box obtains electric energy from the connected communications device. For example, if the portable access box is connected to the communications device by using the interface component, the portable access box obtains electric energy from the communications device. For another example, if the portable access box is connected to the communications device by using the USB interface, the portable access box also obtains electric energy from the communications device.

In a possible implementation, the power entry part may further include a power interface and a power adapter. The housing has an opening. The power interface is located in the housing and opposite to a position of the opening. The power adapter is located outside the housing. The power interface is electrically connected to the power adapter.

In this way, a power plug of the power adapter can be plugged into a power strip in the equipment room, to obtain electric energy from a mains supply. The power plug of the power adapter can be plugged into the power interface, to implement an electrical connection between the power interface and the power adapter. In this way, the mains supply transfers electricity to the portable access box after voltage step-down processing performed by the power adapter.

In a possible implementation, there may alternatively be a plurality of power entry parts. Some of the power entry parts may be pins integrated into the interface component, and the other power entry parts may be pins integrated into the USB interface. The other power entry parts may further include a power interface and a power adapter.

In this way, the portable access box can not only obtain electric energy from the communications device connected to the interface component, but also obtain electric energy from a device connected to the USB interface, and further obtain electric energy from the mains supply. It can be learned that the portable access box can obtain electric energy in three manners.

In a possible implementation, there are a plurality of power entry parts. The power supply component further includes a management circuit. The management circuit is separately electrically connected to the power entry part, the interface component, and the transceiver component. The management circuit is configured to prevent a connection between any two power entry parts.

In the solution shown in this application, the management circuit may cause the electric energy obtained from the power entry part to flow to the interface component and the transceiver component instead of another power entry part. Further, the management circuit can prevent the electric energy obtained from one power entry part from being transferred to another power entry part.

In a possible implementation, the transceiver component includes a universal serial bus USB interface and a first conversion part. The USB interface is electrically connected to the first conversion part. The first conversion part is electrically connected to the interface component. The USB interface is configured to electrically connect to a mobile terminal, to establish a communication connection to the remote device by using the mobile terminal.

In the solution shown in this application, data transmission is implemented between the to-be-commissioned communications device and the portable access box by using the interface component. Data transmission may be implemented between the portable access box and the mobile terminal by using the USB interface. The mobile terminal may establish communication with a server by using an internal communications component such as a 4G module or a 5G module. The remote device may also establish communication with the server. Further, the to-be-commissioned communications device can transmit data to the portable access box, the portable access box can transmit the data to the mobile terminal, the mobile terminal can transmit the data to the server, and the remote device can obtain the data from the server. In this way, data transmission can be implemented between the to-be-commissioned communications device located in the equipment room and the remote device located outside the equipment room.

Data transmission between the to-be-commissioned communications device and the portable access box is implemented by using the interface component. Data transmission between the portable access box and the mobile terminal is implemented by using the USB interface. However, a transmission protocol of the interface component is different from a transmission protocol of the USB interface. Therefore, the transceiver component includes not only the USB interface, but also the first conversion part. The first conversion part is separately electrically connected to the USB interface and the interface component.

In this way, the data received by the interface component may be sent to the first conversion part. The first conversion part converts a transmission protocol of the data into a transmission protocol that can be identified by the USB interface, and sends the data obtained after the conversion to the USB interface.

In a possible implementation, the transceiver component includes a communications component and a second conversion part. The communications component is electrically connected to the second conversion part. The second conversion part is electrically connected to the interface component.

In the solution shown in this application, data transmission is implemented between the to-be-commissioned communications device and the portable access box by using the interface component. The portable access box may establish communication with the server by using the internal communications component. The remote device may also establish communication with the server. Further, the to-be-commissioned communications device can transmit data to the portable access box, the portable access box can transmit the data to the server, and the remote device can obtain the data from the server. In this way, data transmission can be implemented between the to - be-commissioned communications device located in the equipment room and the remote device located outside the equipment room.

The communications component is at least one of a 4G module, a 5G module, and a Wi-Fi module.

Data transmission between the to-be-commissioned communications device and the portable access box is implemented by using the interface component. Data transmission between the portable access box and the remote device is implemented by using the communications component. However, a transmission protocol of the interface component is different from a transmission protocol of the communications component. Therefore, the transceiver component includes not only the communications component, but also the second conversion part. The second conversion part is separately electrically connected to the communications component and the interface component.

In this way, the data received by the interface component may be sent to the second conversion part. The second conversion part converts a transmission protocol of the data into a transmission protocol that can be identified by the communications component, and sends the data obtained after the conversion to the communications component.

In a possible implementation, the transceiver component may alternatively include a USB interface and a first conversion part, and also include a communications component and a second conversion part.

In this way, when the portable access box can be connected to a network by using the communications component, the portable access box may establish a communication connection to the remote device by using the communications component of the portable access box. In this way, when the portable access box cannot be connected to a network by using the communications component of the portable access box, the portable access box may be connected to the mobile terminal by using the USB interface, and establish a communication connection to the remote device by using the communications component of the mobile terminal.

According to another aspect, a communications system is provided. The communications system includes a to-be-commissioned communications device, a remote device, and the foregoing portable access box. There is a communication connection between the portable access box and the communications device. There is a communication connection between the portable access box and the remote device.

In the solution shown in this application, the portable access box includes a communications component. A skilled person needs to carry only the portable access box into an equipment room. Data transmission may be implemented between the portable access box and the communications device, data transmission may be implemented between the communications device and a server, and data transmission may also be implemented between the remote device and the server. Further, data transmission may be implemented between the communications device in the equipment room and the remote device outside the equipment room by using the portable access box and the server.

For another example, in another scenario, the portable access box does not include a communications component. A skilled person needs to carry only the portable access box and a mobile terminal. Data transmission may be implemented between the portable access box and the mobile terminal, data transmission may be implemented between the mobile terminal and a server, and data transmission may also be implemented between the remote device and the server. Further, data transmission may be implemented between the communications device in the equipment room and the remote device outside the equipment room by using the portable access box, the mobile terminal, and the server.

In this embodiment of this application, the skilled person does not need to carry a notebook computer when performing maintenance on the to-be-commissioned communications device in the equipment room. The skilled person needs to carry only the portable access box with a relatively small volume into the equipment room, and establish the data connection between the portable access box and the communications device in the equipment room. Then, the skilled person may leave the equipment room, and obtain data of the communications device by using the remote device outside the equipment room. It can be learned that in this solution, the skilled person can perform an operation on the communications device outside the equipment room, without being stuck in the equipment room to perform an operation on the communications device, thereby improving flexibility of performing maintenance on the communications device.

In addition, when the skilled person performs maintenance on the communications device in the equipment room, the skilled person does not need to carry the notebook computer with a large volume and a large weight, to facilitate travel of the skilled person.

In addition, the skilled person does not need to perform the operation in the equipment room with a relatively poor environment, but performs the operation in a relatively comfortable environment outside the equipment room, so that working efficiency of the skilled person can be improved to a certain extent.

In addition, the portable access box carried by the skilled person includes the power supply component, to ensure the long-time operation of the skilled person.

### BRIEF DESCRIPTION OF DRAWINGS

FIG. 1 is a schematic diagram of a scenario of a communications system according to this application;
FIG. 2 is a schematic diagram of a structure of a portable access box according to this application;
FIG. 3 is a schematic diagram of a structure of a portable access box according to this application;
FIG. 4 is a schematic diagram of a structure of a portable access box according to this application;
FIG. 5 is a schematic diagram of pins in a combined serial port and network port of a portable access box according to this application;
FIG. 6 is a schematic diagram of a structure of a portable access box according to this application;
FIG. 7 is a schematic diagram of a structure of a portable access box according to this application;
FIG. 8 is a schematic diagram of a structure of a portable access box according to this application;
FIG. 9 is a schematic diagram of a structure of a portable access box according to this application;
FIG. 10 is a schematic diagram of a scenario of a communications system according to this application; and
FIG. 11 is a schematic diagram of a structure of a portable access box according to this application.

### Description of illustrations:

10. Portable access box 20. Communications device 30. Remote device 40. Mobile terminal 50. Server
1. Housing 11. Opening
2. Power supply component 21. Power entry part 22. Management circuit
211. Power interface 212. Power adapter
3. Interface component 31. Network port 32. Serial port 33. Pin
331. Serial port pin 332. Network port pin 333. Power pin
4. Transceiver component 41. USB interface 42. First conversion part 43. Communications component 44. Second conversion part

### DESCRIPTION OF EMBODIMENTS

An embodiment of this application provides a portable access box. Data transmission can be implemented by using the portable access box between a communications device located in an equipment room and a remote device located outside the equipment room.

In the communications field, when network entry configuration or maintenance needs to be performed on to-be-commissioned communications devices in the equipment room such as a router and a switch, a skilled person generally needs to carry a notebook computer into the equipment room, and establish a data connection between the notebook computer and the to-be-commissioned communications device around the to-be-commissioned communications device. Then, the skilled person obtains data of the to-be-commissioned communications device by using the notebook computer, or performs information configuration and the like on the to-be-commissioned communications device by using the notebook computer.

However, each time maintenance is performed on the to-be-commissioned communications device, the skilled person needs to carry the notebook computer into the equipment room, and perform a related operation near the communications device. In this way, flexibility of performing maintenance on the communications device is relatively poor. A temperature in the equipment room is relatively low, and noise is relatively large, which easily affects working efficiency of the skilled person. Consequently, working efficiency is relatively low.

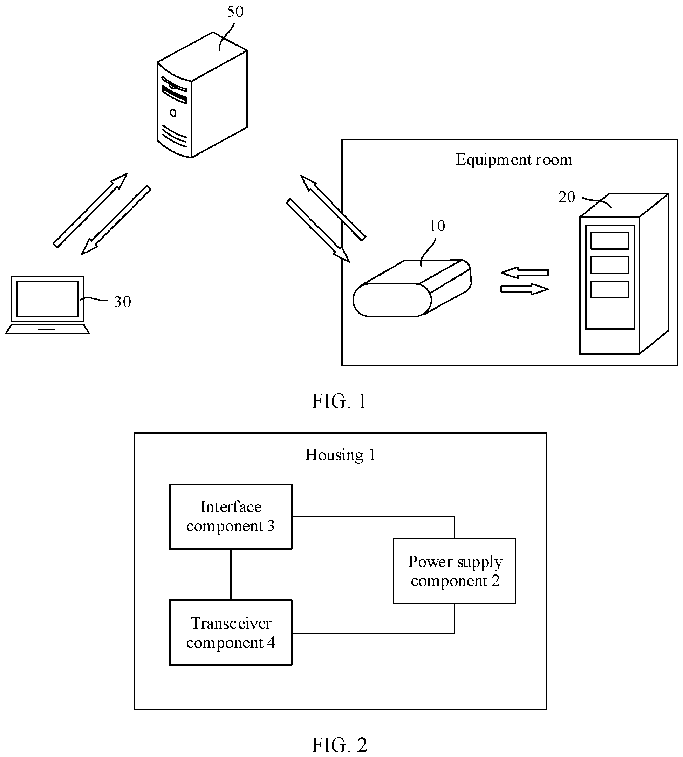

In this solution, the foregoing problem can be resolved by using the portable access box. For example, FIG. 1 is a schematic diagram of an application scenario of a portable access box. When network entry configuration or maintenance needs to be performed on a communications device 20, the skilled person may place a portable access box 10 around the communications device 20, and establish a data connection between the portable access box 10 and the communications device 20. Then, the skilled person establishes a communication connection between a remote device 30 outside the equipment room and the portable access box 10 in the equipment room. In this way, data transmission may be implemented between the communications device 20 in the equipment room and the remote device 30 outside the equipment room by using the portable access box 10.

On this basis, when the skilled person performs maintenance on the communications device 20, the skilled person can perform an operation outside the equipment room, without being stuck in the equipment room to perform an operation, thereby improving flexibility of performing maintenance on the communications device. In addition, the skilled person may perform an operation in an office region with a relatively proper environment outside the equipment room, thereby improving working efficiency of the skilled person. In addition, each time the skilled person performs maintenance on the to-be-commissioned communications device, the skilled person does not need to carry a notebook computer with a large volume and a relatively large weight, and needs to carry only the portable access box with a relatively small volume and a relatively small weight, to facilitate travel of the skilled person.

Because the portable access box 10 has a relatively small volume and a small weight, the portable access box 10 may be carried by the skilled person. Certainly, the portable access box 10 may also be placed in the equipment room. When the portable access box 10 needs to be used, the portable access box 10 is taken around the to-be-commissioned communications device 20 to establish a connection to the communications device 20.

The foregoing describes an application scenario of the portable access box 10. The following describes a specific structure of the portable access box 10.

As shown in FIG. 2, the portable access box 10 includes a housing 1, a power supply component 2, an interface component 3, and a transceiver component 4. The power supply component 2, the interface component 3, and the transceiver component 4 are all located in the housing 1. The power supply component 2 is configured to provide electric energy to components in the portable access box 10. Therefore, as shown in FIG. 2, the power supply component 2 is separately electrically connected to the interface component 3 and the transceiver component 4. The interface component 3 is configured to establish a communication connection to the to-be-commissioned communications device 20. The transceiver component 4 is configured to establish a communication connection to the remote device 30.

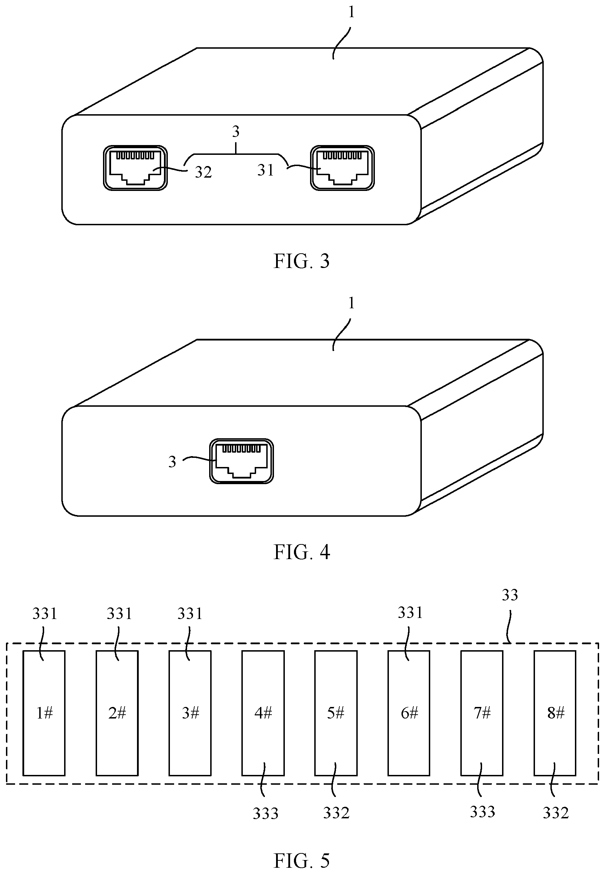

In an example, the interface component 3 is configured to enable establishment of the communication connection between the portable access box 10 and the to-be-commissioned communications device 20. The interface component 3 is located in the housing 1, and is exposed from the housing 1, to facilitate a connection to the communications device 20. The interface component 3 may be a network port 31, or may be a serial port 32. As shown in FIG. 3, the interface component 3 may be a component that includes both the network port 31 and the serial port 32.

The network port 31 may be a management network port, or may be a service network port, or may include both a management network port and a service network port. This embodiment does not limit a specific network port type of the network port 31.

The serial port 32 may also be referred to as a serial interface, a serial communications interface, or a serial telecommunications interface.

In an example, as shown in FIG. 3, the interface component 3 may include the network port 31 and the serial port 32 that are independent of each other. The network port 31 may be a standard network port encapsulated according to the standard encapsulation protocol. The serial port 32 may also be a standard serial port encapsulated according to the standard encapsulation protocol.

As shown in FIG. 3, although the network port 31 and the serial port 32 have similar appearances, definitions of pins in the network port 31 are different from definitions of pins in the serial port 32. For example, the network port 31 may be an RJ-45 interface, and may include eight pins. A definition manner of the eight pins may be shown in Table 1. The serial port 32 may also include eight pins. A definition manner of the eight pins may be shown in Table 2.

**Table 1: Definition of each pin in a network port**

| Pin number | Pin definition | Pin explanation |
|---|---|---|
| 1 | ETH_TXP | Transmit positive electrode |
| 2 | ETH_TXN | Transmit negative electrode |
| 3 | ETH_RXP | Receive positive electrode |
| 4 | NULL | Undefined |
| 5 | NULL | Undefined |
| 6 | ETH_RXN | Receive negative electrode |
| 7 | NULL | Undefined |
| 8 | NULL | Undefined |

**Table 2: Definition of each pin in a serial port**

| Pin number | Pin definition | Pin explanation |
|---|---|---|
| 1 | NULL | Undefined |
| 2 | NULL | Undefined |
| 3 | RS232_TX | Transmit |
| 4 | NULL | Undefined |
| 5 | GND | Grounding |
| 6 | RS232_RX | Receive |
| 7 | NULL | Undefined |
| 8 | NULL | Undefined |

It may be learned from Table 1 and Table 2 that the plurality of pins in the network port 31 include an undefined pin, and the plurality of pins in the serial port 32 also include an undefined pin. Therefore, the undefined pin in the network port 31 may be defined as a serial port pin, or the undefined pin in the serial port 32 may be defined as a network port pin. Further, a combined serial port and network port including the network port pin and the serial port pin may be obtained.

Therefore, as shown in FIG. 4, the interface component 3 may include the combined serial port and network port. The combined serial port and network port is a composite interface integrating the network port and the serial port. For example, the combined serial port and network port may be a composite interface obtained through integrating the serial port on the basis of the network port shown in Table 1. For another example, the combined serial port and network port may alternatively be a composite interface obtained through integrating the network port on the basis of the serial port shown in Table 2. Regardless of an integration manner, the combined serial port and network port includes a plurality of pins 33. As shown in FIG. 5, the plurality of pins 33 may include the serial port pin 331 and the network port pin 332. A definition manner of the eight pins in the combined serial port and network port may be shown in Table 3.

**Table 3: Definition of each pin in a combined serial port and network port**

| Pin number | Pin definition | Pin explanation |
|---|---|---|
| 1 | ETH_TXP | Transmit positive electrode |
| 2 | ETH_TXN | Transmit negative electrode |
| 3 | ETH_RXP | Receive positive electrode |
| 4 | GND | Grounding |
| 5 | RS232_RX | Receive |
| 6 | ETH_RXN | Receive negative electrode |
| 7 | NULL | Undefined |
| 8 | RS232_TX | Transmit |

It should be noted that Table 1 is an example of a definition of the pin in the network port and constructs no specific limitation, Table 2 is an example of a definition of the pin in the serial port and constructs no specific limitation, and Table 3 is an example of a definition of the pin in the combined serial port and network port and constructs no specific limitation.

In an example, the interface component of the portable access box 10 matches an interface component of the communications device 20, so that the communication connection can be established between the portable access box 10 and the communications device 20. For example, one end of a cable used to establish a communication connection is connected to the interface component of the portable access box 10, and the other end of the cable is connected to the interface component of the communications device 20, so that the communication connection is established between the portable access box 10 and the communications device 20.

In an example, the interface component of the to-be-commissioned communications device 20 generally either includes the network port and the serial port that are independent of each other, or includes the combined serial port and network port integrating the network port and the serial port. Therefore, to match more to-be-commissioned communications devices 20, correspondingly, when the portable access box 10 is processed, two types of portable access boxes 10 may be processed based on different interface components. One type is a portable access box including the network port and the serial port that are independent of each other, and the other type is a portable access box including the combined serial port and network port. In this way, in an application, if the to-be-commissioned communications device 20 includes the network port and the serial port that are independent of each other, the portable access box 10 including the network port and the serial port that are independent of each other may be used for connection. If the to-be-commissioned communications device 20 includes the combined serial port and network port, the portable access box 10 including the combined serial port and network port may be used for connection.

In another example, the portable access box may also be processed as follows: The portable access box includes both the network port and the serial port that are independent of each other, and includes the combined serial port and network port. In this way, in an application, the portable access box can match two types of communications devices 20.

In an example, regardless of a specific type of the processed portable access box 10, a cable used to connect to the communications device may be plugged into the interface component 3 of the portable access box 10. A label may be attached to the cable to indicate whether the cable is used to connect to the network port, the serial port, or the combined serial port and network port. In this way, the skilled person quickly connects the portable access box 10 to the to-be-commissioned communications device 20.

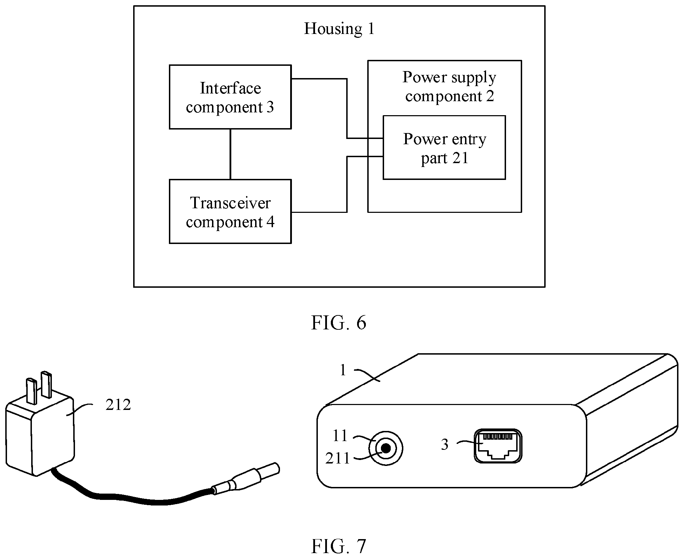

The foregoing describes the interface component 3 of the portable access box. The following describes the power supply component 2 of the portable access box 2. As shown in FIG. 6, the power supply component 2 includes a power entry part 21 to obtain electric energy, and provides the obtained electric energy for the interface component 3 and the transceiver component 4. Correspondingly, as shown in FIG. 6, the power entry part 21 of the power supply component 2 is separately electrically connected to the interface component 3 and the transceiver component 4.

The power entry part 21 may include a power pin integrated into the interface component 3.

In an example, in a solution in which the interface component 3 is a combined serial port and network port, the power entry part 21 may be integrated into the combined serial port and network port. For example, a pin 7 in Table 3 is an undefined pin, and the pin 7 may be defined as a power positive electrode. A pin 4 in Table 3 is a grounding pin. In this way, the pin 4: the grounding pin and the pin 7: the power positive electrode pin may be used as power pins to form a power loop. Correspondingly, with reference to FIG. 5, a pin 1 to a pin 3, and a pin 6 in the eight pins in the combined serial port and network port may be the network port pins 331, a pin 5 and a pin 8 may be the serial port pins 332, a pin 4 and a pin 7 may be the power pins 333. The pin 4 and the pin 7 are separated by the pin 5 and the pin 6, so that the pin 4 serving as the grounding pin and the pin 7 serving as the power positive electrode pin are far away from each other. A short circuit case is not prone to occurrence.

In another example, in a solution in which the interface component 3 includes a network port, the power entry part 21 may be integrated into the network port. For example, as shown in Table 1, the pin 4, the pin 5, the pin 7, and the pin 8 are all undefined pins from which two pins may be selected as power pins. To avoid a short circuit between the two power pins, correspondingly, the two power pins may not be adjacent to each other.

In another example, in a solution in which the interface component 3 includes a serial port, the power entry part 21 may be integrated into the serial port. For example, as shown in Table 2, the pin 1, the pin 2, the pin 4, the pin 7, and the pin 8 are all undefined pins from which a pin may be selected as a power pin. Because the pin 5 is a grounding pin, only one pin needs to be selected from these undefined pins as the power positive electrode. To avoid a short circuit between the two power pins, correspondingly, the two power pins may not be adjacent to each other. Then, one pin may be selected from the pin 1, the pin 2, the pin 7, and the pin 8 as the power positive electrode.

The foregoing descriptions are provided when the power entry part 21 is integrated into the interface component 3. The power entry part 21 may be further integrated into another interface.

For example, if the portable access box 10 includes a universal serial bus (universal serial bus, USB) interface, the power entry part 21 may be further integrated into the USB interface.

In this manner, regardless of whether the power entry part 21 is integrated into the network port, the serial port, the combined serial port and network port, or the USB interface, the portable access box obtains electric energy from the connected communications device. For example, if the portable access box 10 is connected to the communications device 20 by using the interface component 3, the portable access box 10 obtains electric energy from the communications device 20. For another example, if the portable access box 10 is connected to the communications device 20 by using the USB interface, the portable access box 10 also obtains electric energy from the communications device 20.

In another example, the power entry part 21 may further obtain electric energy from a mains supply. Correspondingly, as shown in FIG. 7, the power entry part 21 includes a power interface 211 and a power adapter 212. As shown in FIG. 7, the housing 1 has an opening 11, the power interface 211 is located in the housing 1 and opposite to a position of the opening 11, the power adapter 212 is located outside the housing 1, and the power interface 211 is electrically connected to the power adapter 212.

In this way, a power plug of the power adapter 212 can be plugged into a power strip in the equipment room, to obtain electric energy from the mains supply. The power plug of the power adapter 212 can be plugged into the power interface 211, to implement an electrical connection between the power interface 211 and the power adapter 212. In this way, the mains supply transfers electricity to the portable access box 10 after voltage step-down processing performed by the power adapter 212.

A quantity of power entry parts 21 of the power supply component 2 may be one or more. For example, a quantity of power entry parts 21 of the power supply component 2 may be one. Then, the power entry part 21 may be integrated into the interface component 3, so that the portable access box 10 can obtain electric energy from the communications device 20 connected to the interface component 3. If the portable access box 10 includes a USB interface, the power entry part 21 may also be integrated into the USB interface, so that the portable access box 10 can obtain electric energy from a device connected to the USB interface. Alternatively, the power entry part 21 may be a part including the power interface 211 and the power adapter 212, so that the portable access box 10 can obtain electric energy from the mains supply.

In another example, there may alternatively be a plurality of power entry parts 21 of the power supply component 2. Some of the power entry parts 21 may be integrated into the interface component 3, and the other power entry parts 21 may be integrated into the USB interface. The other power entry parts 21 may include the power interface 211 and the power adapter 212. In this way, the portable access box 10 can not only obtain electric energy from the communications device 20 connected to the interface component 3, but also obtain electric energy from the device connected to the USB interface, and further obtain electric energy from the mains supply. It can be learned that the portable access box can obtain electric energy in three manners.

In another example, the power supply component 2 may further include a charging/discharging battery. The power entry part 21 is separately electrically connected to the charging/discharging battery, the interface component 3, and the transceiver component 4. The charging/discharging battery is also separately electrically connected to the interface component 3 and the transceiver component 4. In this way, the power entry part 21 can not only provide electric energy for the interface component 3 and the transceiver component 4, but also transfer electric energy to the charging/discharging battery. When the power entry part 21 cannot transfer electric energy to the interface component 3 and the transceiver component 4, the charging/discharging battery can further provide electric energy for the interface component 3 and the transceiver component 4, so that the portable access box can continue to work.

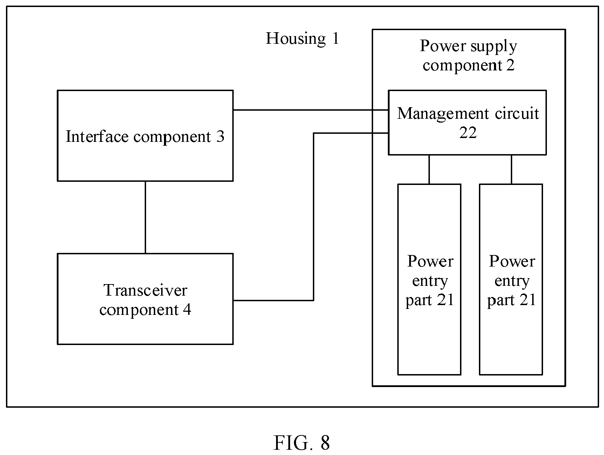

In a solution of the plurality of power entry parts 21, to prevent electric energy obtained from one power entry part 21 from being transferred to another power entry part 21, correspondingly, as shown in FIG. 8, there are a plurality of power entry parts 21, and the power supply component 2 may further include a management circuit 22. The management circuit 22 is separately electrically connected to the power entry part 21, the interface component 3, and the transceiver component 4. The management circuit 22 is configured to prevent a connection between any two power entry parts 21.

In this way, the management circuit 22 may cause the electric energy obtained from the power entry part 21 to flow to the interface component 3 and the transceiver component 4 instead of another power entry part 21.

The foregoing describes the power supply component 2 of the portable access box 10. The following describes the transceiver component 4 of the portable access box 10.

The transceiver component 4 is configured to enable data transmission between the portable access box 10 and the remote device 30. In one manner, the portable access box 10 does not have a communications component. In this case, data transmission needs to be implemented between the portable access box 10 and the remote device 30 by using a communications component of a mobile terminal. In another manner, the portable access box 10 has a communications component. In this case, the portable access box 10 may implement data transmission with the remote device 30 by using the communications component of the portable access box 10. The following separately describes the foregoing two possible implementations.

A manner in which the portable access box 10 implements data transmission with the remote device 30 by using the communications component of the mobile terminal may be as follows: The mobile terminal may be any device that can access the Internet, such as a smartphone or a tablet computer.

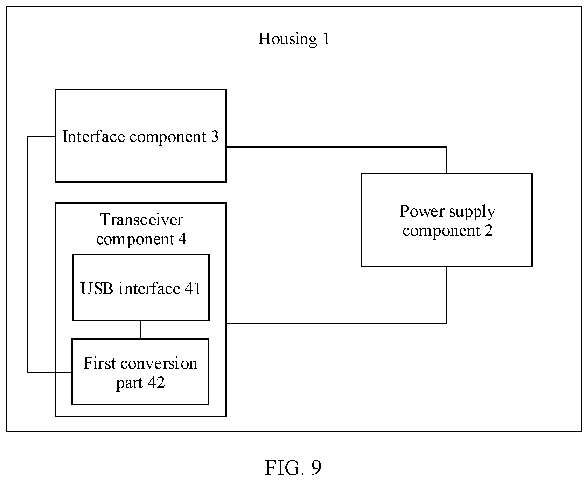

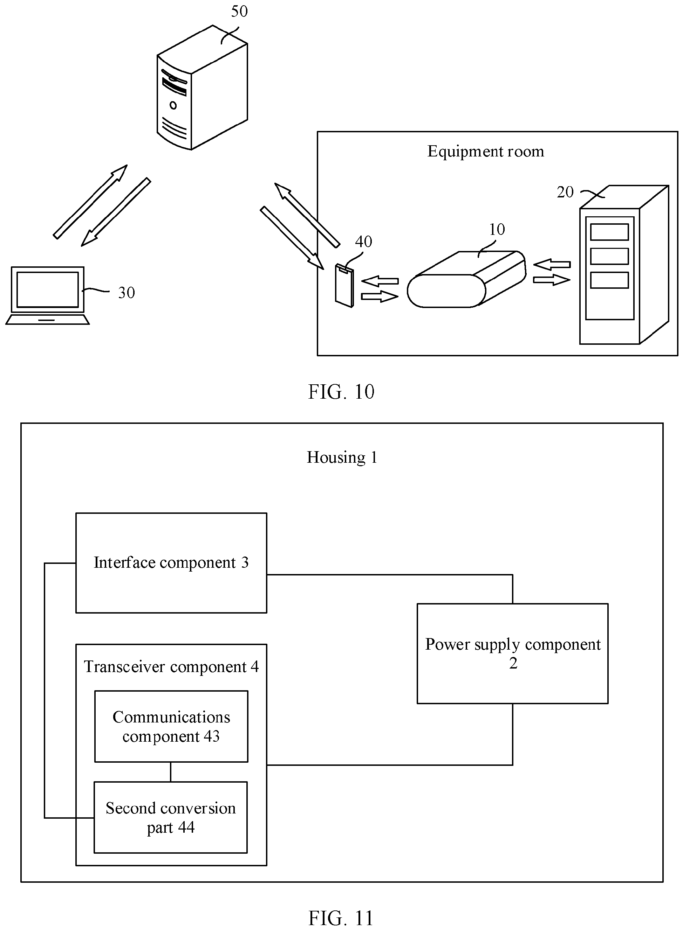

The portable access box 10 performs data transmission with the remote device 30 by using the communications component of the mobile terminal. In this case, the portable access box 10 first needs to establish a communication connection to the mobile terminal. Correspondingly, as shown in FIG. 9, the transceiver component 4 may include a USB interface 41. As shown in FIG. 10, the USB interface 41 is configured to electrically connect to a mobile terminal 40. In this way, as shown in FIG. 10, data transmission is implemented between the to-be-commissioned communications device 20 and the portable access box 10 by using the interface component 3. Data transmission may be implemented between the portable access box 10 and the mobile terminal 40 by using the USB interface 41. The mobile terminal 40 may establish communication with a server 50 by using an internal communications component such as a 4G module or a 5G module. The remote device 30 may also establish communication with the server 50. Further, the to-be-commissioned communications device 20 can transmit data to the portable access box 10, the portable access box 10 can transmit the data to the mobile terminal 40, the mobile terminal 40 can transmit the data to the server 50, and the remote device 30 can obtain the data from the server 50. In this way, data transmission can be implemented between the to-be-commissioned communications device 20 located in the equipment room and the remote device 30 located outside the equipment room.

Data transmission between the to-be-commissioned communications device 20 and the portable access box 10 is implemented by using the interface component 3. Data transmission between the portable access box 10 and the mobile terminal 40 is implemented by using the USB interface 41. However, a transmission protocol of the interface component 3 is different from a transmission protocol of the USB interface 41. Therefore, as shown in FIG. 9, the transceiver component 4 includes not only the USB interface 41, but also the first conversion part 42. The first conversion part 42 is separately electrically connected to the USB interface 41 and the interface component 3.

In this way, the data received by the interface component 3 may be sent to the first conversion part 42. The first conversion part 42 converts a transmission protocol of the data into a transmission protocol that can be identified by the USB interface 41, and sends the data obtained after the conversion to the USB interface 41, so that the USB interface 41 transmits the data to the internal communications component of the mobile terminal 40, and the communications component of the mobile terminal uploads the data to the server 50. The remote device 30 obtains the data from the server 50, so that data transmission is implemented between the to-be-commissioned communications device 20 and the remote device 30 by using the portable access box 10 in the equipment room and the mobile terminal 40.

A manner in which the portable access box 10 implements data transmission with the remote device 30 by using an internal communications component 43 of the portable access box 10 may be as follows:

As shown in FIG. 11, the transceiver component 4 includes the communications component 43. The communications component 43 is at least one of a 4th generation mobile communication technology (the 4th generation mobile communication technology, 4G for short) module, a 5th generation mobile communication technology (the 5th generation mobile communication technology, 5G for short) module, and a wireless fidelity (wireless fidelity, Wi-Fi) module.

In this way, with reference to FIG. 1, data transmission is implemented between the to -be-commissioned communications device 20 and the portable access box 10 by using the interface component 3. The portable access box 10 may establish communication with the server 50 by using the internal communications component 43. The remote device 30 may also establish communication with the server 50. Further, the to-be-commissioned communications device 20 can transmit data to the portable access box 10, the portable access box 10 can transmit the data to the server 50, and the remote device 30 can obtain the data from the server 50. In this way, data transmission can be implemented between the to-be-commissioned communications device 20 located in the equipment room and the remote device 30 located outside the equipment room.

Data transmission between the to-be-commissioned communications device 20 and the portable access box 10 is implemented by using the interface component 3. Data transmission between the portable access box 10 and the remote device 30 is implemented by using the communications component 43. However, a transmission protocol of the interface component 3 is different from a transmission protocol of the communications component 43. Therefore, as shown in FIG. 11, the transceiver component 4 includes not only the communications component 43, but also a second conversion part 44. The second conversion part 44 is separately electrically connected to the communications component 43 and the interface component 3.

In this way, the data received by the interface component 3 may be sent to the second conversion part 44. The second conversion part 44 converts the transmission protocol of the data into a transmission protocol that can be identified by the communications component 43, and sends the data obtained after the conversion to the communications component 43, so that the portable access box 10 uploads the data to the server 50 by using the communications component 43 of the portable access box 10. The remote device 30 obtains data from the server 50, so that data transmission is implemented between the to-be-commissioned communications device 20 and the remote device 30 by using the portable access box 10 in the equipment room.

In an example, the transceiver component may alternatively include the USB interface 41 and the first conversion part 42, and also include the communications component 43 and the second conversion part 44.

In this way, when the portable access box 10 can be connected to a network by using the communications component 43, the portable access box 10 may establish a communication connection to the remote device 30 by using the communications component 43 of the portable access box 10. In this way, when the portable access box 10 cannot be connected to a network by using the communications component 43 of the portable access box 10, the portable access box 10 may be connected to the mobile terminal 40 by using the USB interface 41, and establish a communication connection to the remote device 30 by using the communications component of the mobile terminal 40.

Based on the foregoing descriptions, the skilled person does not need to carry a notebook computer when performing maintenance on the to-be-commissioned communications device in the equipment room. The skilled person needs to carry only the portable access box with a relatively small volume into the equipment room, and establish the data connection between the portable access box and the communications device in the equipment room. Then, the skilled person may leave the equipment room, and obtain data of the communications device by using the remote device outside the equipment room. It can be learned that in this solution, the skilled person can perform an operation on the communications device outside the equipment room, without being stuck in the equipment room to perform an operation on the communications device, thereby improving flexibility of performing maintenance on the communications device.

In addition, when the skilled person performs maintenance on the communications device in the equipment room, the skilled person does not need to carry the notebook computer with a large volume and a large weight, to facilitate travel of the skilled person.

In addition, the skilled person does not need to perform the operation in the equipment room with a relatively poor environment, but performs the operation in a relatively comfortable environment outside the equipment room, so that working efficiency of the skilled person can be improved to a certain extent.

In addition, the portable access box carried by the skilled person includes the power supply component, to ensure the long-time operation of the skilled person.

An embodiment of this application further provides a communications system. As shown in FIG. 1, the communications system includes a to-be-commissioned communications device 20, a remote device 30, and the foregoing portable access box 10. There is a communication connection relationship between the portable access box 10 and the communications device 20. There is a communication connection relationship between the portable access box 10 and the remote device 30.

For example, in a scenario, the portable access box includes a communications component. A skilled person needs to carry only the portable access box 10 into an equipment room. As shown in FIG. 1, data transmission may be implemented between the portable access box 10 and the communications device 20, data transmission may be implemented between the communications device 20 and a server 50, and data transmission may also be implemented between the remote device 30 and the server 50. Further, data transmission may be implemented between the communications device 20 in the equipment room and the remote device 30 outside the equipment room by using the portable access box 10 and the server 50.

For another example, in another scenario, the portable access box 10 does not include a communications component. The skilled person needs to carry only the portable access box 10 and a mobile terminal 40. As shown in FIG. 10, data transmission may be implemented between the portable access box 10 and the mobile terminal 40, data transmission may be implemented between the mobile terminal 40 and the server 50, and data transmission may also be implemented between the remote device 30 and the server 50. Further, data transmission may be implemented between the communications device 20 in the equipment room and the remote device 30 outside the equipment room by using the portable access box 10, the mobile terminal 40, and the server 50.

In this embodiment of this application, the skilled person does not need to carry a notebook computer when performing maintenance on the to-be-commissioned communications device in the equipment room. The skilled person needs to carry only the portable access box with a relatively small volume into the equipment room, and establish the data connection between the portable access box and the communications device in the equipment room. Then, the skilled person may leave the equipment room, and obtain data of the communications device by using the remote device outside the equipment room. It can be learned that in this solution, the skilled person can perform an operation on the communications device outside the equipment room, without being stuck in the equipment room to perform an operation on the communications device, thereby improving flexibility of performing maintenance on the communications device.

In addition, when the skilled person performs maintenance on the communications device in the equipment room, the skilled person needs to carry only the portable access box with a small volume and a small weight, and does not need to carry a notebook computer with a large volume and a large weight, to facilitate travel of the skilled person.

In addition, the skilled person does not need to perform the operation in the equipment room with a relatively poor environment, but performs the operation in a relatively comfortable environment outside the equipment room, so that working efficiency of the skilled person can be improved to a certain extent.

In addition, the portable access box carried by the skilled person includes a power supply component to implement charging at any time at any place, to ensure a long-time operation of the skilled person.

The foregoing descriptions are merely example embodiments of this application, but are not intended to limit this application. Any modification, equivalent replacement, or improvement made without departing from the principle of this application should fall within the protection scope of this application.

## Claims

1. A portable access box (10), wherein the portable access box (10) comprises a housing (1), a power supply component (2), an interface component (3), and a transceiver component (4), wherein
the power supply component (2), the interface component (3), and the transceiver component (4) are all located in the housing (1);
the power supply component (2) is separately electrically connected to the interface component (3) and the transceiver component (4), and the interface component (3) is electrically connected to the transceiver component (4); and
the interface component (3) is configured to establish a communication connection to a to-be-commissioned communications device (20), and the transceiver component (4) is configured to establish a communication connection to a remote device (30).

2. The portable access box (10) according to claim 1, wherein the interface component (3) comprises a network port (31) and a serial port (32).

3. The portable access box (10) according to claim 1 or 2, wherein the interface component (3) comprises a combined serial port and network port, and a plurality of pins (33) of the combined serial port and network port comprise a serial port pin (331) and a network port pin (332).

4. The portable access box (10) according to any one of claims 1 to 3, wherein the power supply component (2) comprises at least one power entry part (21); and
each power entry part (21) is electrically connected to the interface component (3) and the transceiver component (4).

5. The portable access box (10) according to claim 4, wherein there are a plurality of power entry parts (21), and the power supply component (2) further comprises a management circuit (22); and
the management circuit (22) is separately electrically connected to the power entry part (21), the interface component (3), and the transceiver component (4), and the management circuit (22) is configured to prevent a connection between any two power entry parts (21).

6. The portable access box (10) according to claim 4 or 5, wherein the power entry part (21) comprises a power pin integrated into the interface component (3).

7. The portable access box (10) according to any one of claims 4 to 6, wherein the power entry part (21) comprises a power interface (211) and a power adapter (212); and
the housing (1) has an opening (11), the power interface (211) is located in the housing (1) and opposite to a position of the opening (11), the power adapter (212) is located outside the housing (1), and the power interface (211) is electrically connected to the power adapter (212).

8. The portable access box (10) according to any one of claims 1 to 7, wherein the transceiver component (4) comprises a universal serial bus USB interface (41) and a first conversion part (42); and
the USB interface (41) is electrically connected to the first conversion part (42), the first conversion part (42) is electrically connected to the interface component (3), and the USB interface (41) is configured to be electrically connected to a mobile terminal (40), to establish a communication connection to the remote device (30) by using the mobile terminal (40).

9. The portable access box (10) according to any one of claims 1 to 8, wherein the transceiver component (4) comprises a communications component (43) and a second conversion part (44), and the communications component (43) is electrically connected to the second conversion part (44); and the second conversion part (44) is electrically connected to the interface component (3).

10. The portable access box (10) according to claim 9, wherein the communications component (43) is at least one of a 4G module, a 5G module, and a Wi-Fi module.

11. A communications system, wherein the communications system comprises a to-be-commissioned communications device (20), a remote device (30), and the portable access box (10) according to any one of claims 1 to 10, wherein
there is a communication connection between the portable access box (10) and the communications device (20), and there is a communication connection between the portable access box (10) and the remote device (30).
